# EUROPEAN PATENT APPLICATION

(11) **EP 4 831 142 A1**
(43) Date of publication of application: **28.10.2026**
(21) Application number: 24922109.4
(22) Date of filing: 24.10.2024
(51) Int. Cl.: C04B 28/14, B28B 1/52, B32B 13/08, C04B 16/06, C04B 18/167

(54) **GYPSUM BOARD AND METHOD FOR PRODUCING GYPSUM BOARD**

(30) Priority: 30.01.2024 JP 2024012315
(71) Applicant: Yoshino Gypsum Co., Ltd., Tokyo 100-0005 (JP)
(72) Inventor: YAMAMOTO, Takeshi, Tokyo 100-0005 (JP); SATO, Yosuke, Tokyo 100-0005 (JP); SATO, Daisuke, Tokyo 100-0005 (JP); OTANI, Miho, Tokyo 100-0005 (JP)
(74) Representative: Ter Meer und Partner mbB
(86) International application number: PCT/JP2024/037990
(87) International publication number: WO 2025/163999

(57) **Abstract**

A gypsum board includes a gypsum core, wherein the gypsum core is a cured body of a gypsum slurry including water and a gypsum raw material containing recycled gypsum recovered from gypsum board waste; and wherein the gypsum core contains organic fibers in a proportion of 3.0 mass% or less.

## Description

### TECHNICAL FIELD

The present disclosure relates to a gypsum board and a method for producing a gypsum board.

### BACKGROUND ART

Patent Document 1 discloses a method for producing a gypsum board, including a step of preparing a slurry by mixing together a gypsum raw material containing 70 wt% or more of regenerated gypsum, 0.1 wt% to 1.0 wt% of a water-reducing agent based on the gypsum raw material, 0.01 wt% to 0.10 wt% of a foaming agent based on the gypsum raw material, and water, and a step of curing the slurry, in which the gypsum raw material accounts for 90 wt% or more of an amount obtained by excluding the water content from the total amount of the slurry.

### CITATION LIST

### PATENT LITERATURE

Patent Document 1: Japanese Patent Application Laid-Open Publication No. 2020-063165

### SUMMARY OF THE INVENTION

### PROBLEM TO BE SOLVED BY THE INVENTION

In the related art, waste gypsum board has been discharged as industrial waste.

Examples of waste gypsum board include offcuts generated during production of gypsum boards and during interior finishing work in new buildings. Most offcuts generated during production of gypsum boards and the like are recycled by gypsum board manufacturers and the like.

Waste gypsum board also includes gypsum board waste discharged during renovation of buildings or demolition work. Most gypsum board waste discharged during renovation of buildings or demolition work is not recycled but is instead disposed of in landfills. Such gypsum board waste discharged during renovation of buildings or demolition work accounts for a large proportion of the total gypsum board waste discharged.

With an anticipated increase in demolition of buildings and the like in the future, the amount of gypsum board waste is expected to further increase. In terms of environmental protection, cost reduction, and the like, there is a demand to reduce the amount of gypsum board waste that is disposed of in landfills.

Thus, as disclosed in Patent Document 1 and the like, in the related art, studies have been conducted on gypsum boards produced using gypsum board waste.

However, in order to produce regenerated gypsum for use in the gypsum board disclosed in Patent Document 1, a large number of processing steps are required, resulting in problems in terms of production cost and productivity.

It has therefore been proposed to produce a gypsum board using, as a gypsum source, recycled gypsum obtained by crushing and calcining gypsum board waste.

Since gypsum boards are used as building materials and the like, there is demand for the gypsum boards to have noncombustible properties. However, there is a risk of components other than gypsum being mixed into recycled gypsum. Therefore, there has been concern as to whether gypsum boards produced using recycled gypsum serving as a gypsum source can exhibit sufficient noncombustibility for practical use.

In light of the above-described problem, an object of an aspect of the present invention is to provide a gypsum board having noncombustible properties even when recycled gypsum recovered from gypsum board waste is used as a gypsum material.

### MEANS FOR SOLVING THE PROBLEM

According to one embodiment of the present invention, to solve the above-described problem, a gypsum board including a gypsum core is provided, in which the gypsum core is a cured body of a gypsum slurry including water and a gypsum raw material containing recycled gypsum recovered from gypsum board waste; and wherein the gypsum core contains organic fibers in a proportion of 3.0 mass% or less.

### ADVANTAGEOUS EFFECTS OF THE INVENTION

According to one embodiment of the present disclosure, it is possible to provide a gypsum board having noncombustible properties even when recycled gypsum recovered from gypsum board waste is used as a gypsum raw material.

### BRIEF DESCRIPTION OF THE DRAWINGS

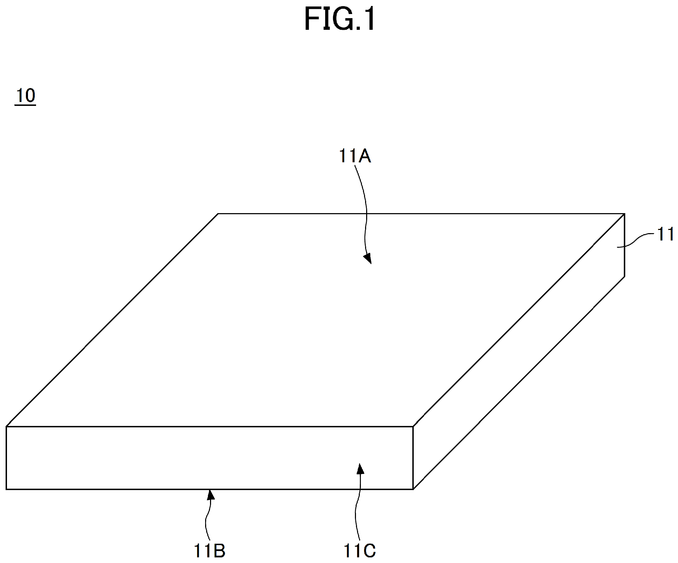

(FIG. 1) FIG. 1 is an explanatory view of a gypsum board according to an embodiment of the present disclosure.

### DESCRIPTION OF THE EMBODIMENTS

Hereinafter, embodiments of the present invention will be described with reference to the drawings. However, the present invention is not limited to the following embodiments, and various modifications and substitutions may be made to the following embodiments without departing from the scope of the present invention.

### [Gypsum Board]

### (1) Gypsum Board

Hereinafter, a gypsum board according to the present embodiment will be described with reference to the drawings.

FIG. 1 is a schematic view of a gypsum board 10 according to the present embodiment.

As illustrated in FIG. 1, the gypsum board 10 of the present embodiment includes a gypsum core 11.

The gypsum board 10 of the present embodiment may be in the form of a plate as illustrated in FIG. 1. The gypsum core 11 has an upper surface 11A and a lower surface 11B opposite to the upper surface 11A. The upper surface 11A and the lower surface 11B are surfaces located at opposing ends in a thickness direction.

A side surface 11C is provided between the upper surface 11A and the lower surface 11B.

Although FIG. 1 illustrates the gypsum board 10 and the gypsum core 11 as rectangular parallelepipeds, the gypsum board 10 including the gypsum core 11 can be used as a building material or the like, and is not limited to such a shape. The gypsum board 10 may be shaped as appropriate depending on the intended use.

Although FIG. 1 illustrates an example in which the gypsum board 10 is formed of only the gypsum core 11, the present disclosure is not limited thereto. The gypsum board 10 of the present embodiment may be selected from, for example, a gypsum board specified in JIS A 6901 (2014), a gypsum board lighter or heavier than that specified in JIS A 6901 (2014) (hereinafter, these gypsum boards are collectively referred to as "gypsum board"), a glass mat gypsum board, or a gypsum-containing board including a glass fiber nonwoven fabric.

Accordingly, depending on the form of the gypsum board 10 of the present embodiment, a surface material such as gypsum board liner or a glass mat may be further provided on either or both the upper surface 11A and the lower surface 11B of the gypsum core 11. Alternatively, a glass fiber nonwoven fabric (glass tissue) or the like may be embedded in the upper surface 11A and/or the lower surface 11B. As illustrated in FIG. 1, the gypsum board 10 may be formed solely of the gypsum core 11 without any surface material provided on the upper surface 11A or the lower surface 11B of the gypsum core 11.

### (1-1) Gypsum Core

In the gypsum board 10 according to the present embodiment, the gypsum core 11 can be made into a cured body of a gypsum slurry that includes water and a gypsum raw material including recycled gypsum recovered from gypsum board waste.

### (1-2) Components Contained in the Gypsum Slurry

The gypsum core 11 contained in the gypsum board 10 of the present embodiment is a cured body of a gypsum slurry. The components that can be contained in the gypsum slurry will be described below.

### (1-2-1) Gypsum Raw Material

The gypsum raw material means a material containing gypsum, such as calcined gypsum, used for preparing the gypsum slurry.

The gypsum raw material can include recycled gypsum as described above.

One method for reusing gypsum board waste is to use regenerated gypsum obtained by crystallizing gypsum that is contained in the gypsum board waste and serves as a raw material. However, in order to produce the regenerated gypsum, it is necessary to crush and calcine the gypsum board waste, prepare a gypsum slurry, and allow crystallization to occur in the gypsum slurry, thereby requiring a large number of production steps. This is problematic in terms of production cost and the like.

Accordingly, the inventors of the present invention conducted studies on gypsum boards produced using recycled gypsum recycled from gypsum board waste. The recycled gypsum is gypsum that has been converted into hemihydrate gypsum by crushing and calcining gypsum board waste. In other words, the recycled gypsum is a calcined product of crushed gypsum board waste.

Since the recycled gypsum is gypsum obtained by crushing and calcining gypsum board waste, the number of production steps is fewer than that for regenerated gypsum, and the energy required in the manufacturing process can also be reduced. Accordingly, the recycled gypsum can reduce production costs and the like as compared with regenerated gypsum.

As described above, the recycled gypsum is a calcined product of crushed gypsum board waste. Therefore, the recycled gypsum may contain calcined gypsum, that is, calcium sulfate hemihydrate. The recycled gypsum may be composed only of calcined gypsum as the gypsum component, but dihydrate gypsum may remain. Since the recycled gypsum is derived from gypsum board waste, components other than the gypsum component, such as paper originating from the gypsum board waste, may also be included.

The recycled gypsum may include a dry-crushed product of gypsum board waste. The recycled gypsum may also be composed of a dry-crushed product of gypsum board waste. However, even in this case, the inclusion of unavoidable impurities introduced during the production process is not excluded. The dry-crushed product of gypsum board waste can suppress adhesion or inclusion of moisture with or in the crushed material during crushing as compared with a wet-crushed product or the like. Therefore, when the recycled gypsum includes the dry-crushed product of gypsum board waste, inclusion of dihydrate gypsum can be suppressed. Note that the dry-crushed product of gypsum board waste means a calcined material (i.e., a calcined product) obtained by calcining a crushed material that is obtained by dry crushing gypsum board waste.

The proportion of recycled gypsum in the gypsum raw material is not particularly limited. However, according to studies conducted by the inventors of the present disclosure, even when the proportion of recycled gypsum in the gypsum raw material is high, it is possible to obtain a gypsum board having noncombustible properties. Therefore, from the viewpoint of environmental protection and cost reduction, it is preferable that the proportion of recycled gypsum in the gypsum raw material be high. For example, the proportion of recycled gypsum in the gypsum raw material is preferably 30 mass% or more, more preferably 60 mass% or more, and still more preferably 65 mass% or more.

In the present embodiment, the gypsum board 10 having noncombustible properties is one in which the total heat release over a period of 20 minutes in a heat release test is 8 MJ/m² or less.

The gypsum raw material may be composed only of recycled gypsum. Thus, the proportion of recycled gypsum contained in the gypsum raw material can be set to 100 mass% or less.

Accordingly, for example, the proportion of recycled gypsum in the gypsum raw material is preferably 30 mass% to 100 mass%, more preferably 60 mass% to 100 mass%, and still more preferably 65 mass% to 100 mass%.

The gypsum raw material may contain, in addition to recycled gypsum, a virgin gypsum raw material, that is, a new gypsum raw material that is not a recycled product.

β-type calcined gypsum or α-type calcined gypsum alone, or a mixture of both, can be used as the virgin gypsum raw material. The β-type calcined gypsum can be obtained by calcining, in air, gypsum composed of natural gypsum, by-product gypsum, flue-gas desulfurization gypsum, or a mixture of any combination thereof. The α-type calcined gypsum can be obtained by calcining, in water (including steam), gypsum composed of natural gypsum, by-product gypsum, flue-gas desulfurization gypsum, or a mixture of any combination thereof.

### (1-2-2) Additives

The gypsum slurry may further contain various additives.

The additives may be, for example, one or more selected from foaming agents, adhesion improvers, inorganic fibers (e.g., glass fibers), organic fibers, lightweight aggregates, refractory materials (e.g., vermiculite), setting retarders, setting accelerators, water-reducing agents, bubble diameter control agents (e.g., sulfosuccinate-type surfactants), water repellents (e.g., silicone and paraffin), organic carboxylic acids, organic carboxylates, and organic phosphoric acid compounds. An adhesion improver (e.g., starch or polyvinyl alcohol) that improves adhesion between the gypsum core 11 and the gypsum board liner may also be used as an additive.

The foaming agent may be mixed with water or the like to generate foam and then added to the gypsum slurry, or the foaming agent may be added to the gypsum slurry and then foamed during mixing or the like. As the foaming agent, it is preferable to include, for example, one or more selected from alkyl ether sulfates and alkyl sulfates.

In the case where the foaming agent is to be added to the gypsum slurry, by including a bubble diameter control agent in the gypsum slurry, for example, the sizes of the bubbles in the gypsum slurry and in the gypsum core 11 can be easily controlled.

### (1-2-3) Organic Fibers

Gypsum board waste contains components other than gypsum, and there is a risk of such components being mixed into the recycled gypsum as well. Therefore, there has been concern as to whether gypsum boards produced using recycled gypsum serving as a gypsum source can exhibit sufficient noncombustibility for practical use.

Accordingly, as a result of studies conducted by the inventors of the present disclosure, it was confirmed that organic fibers have a significant influence on the noncombustible properties of the gypsum board 10. The inventors further found that a gypsum board having noncombustible properties can be obtained by setting the proportion of organic fibers in the gypsum core within a predetermined range, thereby completing the present disclosure.

Specifically, the gypsum core 11 may contain a proportion organic fibers in a proportion of 3.0 mass% or less. By setting the proportion of organic fibers in the gypsum core 11 to 3.0 mass% or less, the gypsum board 10 having noncombustible properties can be obtained. When the proportion of organic fibers in the gypsum core 11 is 3.0 mass% or less, the flowability of the gypsum slurry during production of the gypsum board can be improved, thereby increasing productivity in the production of the gypsum boards.

The proportion of organic fibers in the gypsum core 11 is preferably 2.8 mass% or less, and more preferably 2.5 mass% or less.

The gypsum core 11 may also contain organic fibers. Specifically, the gypsum core 11 may have a proportion of organic fibers of 0.1 mass% or more.

When the gypsum core 11 contains 0.1 mass% or more of organic fibers, the shear strength and the bending fracture load of the gypsum core 11 and the gypsum board 10, and the like can be increased.

Therefore, the proportion of organic fibers in the gypsum core 11 is preferably 0.1 mass% or more and 3.0 mass% or less, more preferably 0.1 mass% or more and 2.8 mass% or less, and still more preferably 0.1 mass% or more and 2.5 mass% or less.

The organic fibers are mainly derived from paper and the like contained in recycled gypsum, and thus primarily originate from the recycled gypsum. It is to be noted that, in order to adjust the proportion of organic fibers contained in the gypsum core 11, organic fibers may be added to the gypsum slurry during preparation of the gypsum slurry, as necessary.

Further, the proportion of organic fibers contained in the recycled gypsum may also be adjusted by controlling the degree of crushing of the recycled gypsum or by removing paper by sieving or the like, as necessary.

The effect of the organic fiber content in the gypsum core 11 of the gypsum board 10 on the total heat release will be described below.

Specifically, in Experimental Examples 1-1 to 1-7, a gypsum slurry was prepared by mixing together virgin gypsum or recycled gypsum, paper, and water in accordance with the blending ratios illustrated in Table 1. Note that the water used for preparing the gypsum slurry was added in an amount such that the specific gravity of the cured gypsum body obtained by curing the gypsum slurry became 0.65. The gypsum slurry was placed between two gypsum board liners and formed to a thickness of 12.5 mm, thereby preparing gypsum board 10. Each gypsum board liner had a basis weight of 200 g/m².

The recycled gypsum used was obtained by crushing a gypsum board to a degree that attached paper could be removed, completely removing the paper by sieving or the like, and then calcining the resulting material. As the paper, paper recovered during production of the recycled gypsum was used.

### (Heat Release Test)

The obtained gypsum board specimens were subjected to a heat release test in accordance with the cone calorimeter method specified in ISO 5660-1, and the total heat release over a 20-minute heating period was measured.

The evaluation results are illustrated in Table 1.

**[Table 1]**

| | Raw Materials (Parts by Mass) | | | Evaluation Results |
|---|---|---|---|---|
| | Gypsum Raw Materials | | Paper | Total Heat Release (MJ/m²) |
| | Virgin Gypsum | Recycled Gypsum | | |
| Experimental Example 1-1 | 100 | 0 | 0.0 | 3.9 |
| Experimental Example 1-2 | 0 | 100 | 1.0 | 4.8 |
| Experimental Example 1-3 | 0 | 100 | 2.0 | 6.1 |
| Experimental Example 1-4 | 0 | 100 | 25 | 6.6 |
| Experimental Example 1-5 | 0 | 100 | 2.8 | 6.8 |
| Experimental Example 1-6 | 0 | 100 | 3.0 | 7.2 |
| Experimental Example 1-7 | 0 | 100 | 5.0 | 8.4 |

According to the results illustrated in Table 1, it was confirmed that when the paper content (organic fibers) was 3 mass% or less, the total heat release over a period of 20 minutes was 8 MJ/m² or less. Accordingly, it was confirmed that the gypsum core 11 exhibits excellent noncombustible properties when the organic fiber content is 3.0 mass% or less, and that the noncombustible properties can be further improved when the organic fiber content is 2.8 mass% or less or 2.5 mass% or less.

The proportion of organic fibers in the gypsum core 11 can be measured and calculated, for example, by the following procedure.

First, the gypsum core 11 is heated to 150°C. Then, the heated gypsum core 11 is crushed to obtain a crushed product. The degree of crushing is not particularly limited. The size may be selected such that the time for dissolving the gypsum component during water washing on the sieve described below can be reduced, and the gypsum core may be crushed accordingly.

Next, the obtained crushed product is washed with water on a 100-mesh sieve. The residue remaining on the sieve corresponds to the organic fibers contained in the gypsum core. After drying, the mass of the residue is measured and defined as the organic fiber mass. Then, the mass ratio of the organic fiber mass to the crushed product supplied onto the sieve is calculated and defined as the mass ratio of the organic fibers to the gypsum core 11.

When the gypsum board 10 has a surface material, the above evaluation can be carried out on the gypsum core 11 after the portion of the gypsum board 10 including the surface material is removed.

Accordingly, the organic fibers contained in the gypsum core of the gypsum board of the present embodiment may be defined as the paper content remaining on a 100-mesh sieve after washing the gypsum core with water using the 100-mesh sieve. The gypsum core of the gypsum board of the present embodiment may contain various organic fibers having different lengths.

### (2) Total Heat Release of the Gypsum Board

The gypsum board 10 of the present embodiment preferably exhibits a total heat release over a period of 20 minutes of 8 MJ/m² or less, and more preferably, 6 MJ/m² or less.

When the total heat release of the gypsum board 10 over a period of 20 minutes is 8 MJ/m² or less, a gypsum board having excellent noncombustible properties can be obtained, and when it is 6 MJ/m² or less, the noncombustible properties can be maintained even when a coating containing an organic component is applied to the surface of the gypsum board 10.

The total heat release of the gypsum board 10 can be selected by adjusting the proportion of organic fiber in the gypsum board 11, and can be adjusted, for example, by the degree of paper removal during production of recycled gypsum, or the like. For example, as described above in "(Organic Fibers)" of "((1-2) Components Contained in the Gypsum Slurry," the total heat release of the gypsum board 10 can be reduced to 8 MJ/m² or less when the proportion of organic fibers in the gypsum core 11 is 3.0 mass% or less. In particular, when the proportion of organic fibers in the gypsum core 11 is 2.8 mass% or less, the total heat release can be more effectively suppressed.

### (3) Specific Gravity of the Gypsum Board

The specific gravity of the gypsum board is not particularly limited, but may be 0.65 or more, for example. When the specific gravity of the gypsum board is 0.65 or more, the strength of the gypsum board can be more effectively increased.

The upper limit of the specific gravity of the gypsum board is not particularly limited, but may be less than 1.1, and may also be 1.0 or less, in order to improve handleability at a construction site.

The specific gravity of the gypsum board can be evaluated in accordance with the method described in JIS A 6901 (2014).

### (4) Configuration Examples of the Gypsum Board

The gypsum board 10 of the present embodiment may be in the form of gypsum board, for example.

That is, the gypsum board 10 of the present embodiment may be a gypsum board having gypsum board liner on the upper surface 11A of the gypsum core 11 and on the lower surface 11B of the gypsum core 11.

In such a case, the gypsum board liner is not particularly limited; however, the basis weight of each gypsum board liner is preferably 200 g/m² or less.

Further, when the basis weight of the gypsum board liner is 200 g/m² or less, the noncombustible properties of the gypsum board 10 can be improved.

When configured as a gypsum board, it is also preferable that the above-described requirement for total heat release be satisfied; for example, the total heat release over a period of 20 minutes is preferably 8 MJ/m² or less.

### (5) Examination of the Effect of Organic Fiber Inclusion on the Compressive Strength of a Cured Gypsum Body (Experimental Example 2)

The inventors of the present invention examined properties other than the noncombustible properties with respect to the cured gypsum body produced using recycled gypsum. Here, the results of an examination into the effect of organic fibers attached to recycled gypsum, such as paper, on the strength of the gypsum board will be described.

In order to accurately examine the effect of organic fibers, the compressive strength of a cured gypsum body obtained by curing a gypsum slurry prepared by varying the amount of added paper was evaluated. The gypsum slurry was prepared using recycled gypsum from which paper (organic fibers) had been completely removed.

Specifically, in Experimental Examples 2-1 to 2-4, a gypsum slurry was prepared by mixing together recycled gypsum, paper, and water in accordance with the blending ratios illustrated in Table 2 below.

Note that the water used for preparing the gypsum slurry was added in an amount such that the cured gypsum body obtained by curing the gypsum slurry had a predetermined specific gravity.

The gypsum slurry was then poured into a cubic mold with a side length of 40 mm, and dried to constant weight at 40°C to prepare a cured gypsum body as a test specimen.

The recycled gypsum used was obtained by crushing a gypsum board to a degree that attached paper could be removed, completely removing the paper by sieving or the like, and then calcining the resulting material. As the paper, paper recovered during production of the recycled gypsum was used.

### (Method for Evaluating Compressive Strength of Cured Gypsum Body)

The compressive strength of the obtained cured gypsum body serving as a test specimen was measured using an AUTOGRAPH (AG-X plus, available from Shimadzu Corporation) at a loading rate of 1 mm/min. The compressive strength of each experimental example illustrated in Table 2 below represents an average value of the compressive strengths of six test specimens prepared under the same conditions. The compressive strength of the cured gypsum body in the other experimental examples described below was also evaluated under the same conditions.

The evaluation results are illustrated in Table 2.

**[Table 2]**

| | Raw Materials (Parts by Mass) | | | Evaluation Results of Cured Gypsum Body | |
|---|---|---|---|---|---|
| | Gypsum Raw Materials | | Paper | Specific Gravity | Compressive Strength (kgf/cm²) |
| | Virgin Gypsum | Recycled Gypsum | | | |
| Experimental Exarrp le 2-1 | 0 | 100 | 25 | 0.65 | 41.1 |
| Experimental Example 2-2 | 0 | 100 | 2.0 | 0.65 | 42.1 |
| Experimental Example 2-3 | 0 | 100 | 15 | 0.65 | 43.0 |
| Experimental Example 2-4 | 0 | 100 | 05 | 0.65 | 45.5 |

Based on the results illustrated in Table 2, it was confirmed that the compressive strength of the cured gypsum body tends to increase as the paper content decreases. However, even when the blending amount of paper was 2.5 parts by mass, that is, 2.5 mass% relative to the gypsum raw material, the cured gypsum body exhibited a compressive strength of 25 kgf/cm² or more, confirming that the cured gypsum body has sufficient strength. In a case where the cured gypsum body has a compressive strength of 25 kgf/cm² or more, excessive driving of a screw can be prevented during driving of a screw into the cured gypsum body, thereby preventing damage to the cured gypsum body and providing sufficient holding force for the driven screw. In other words, when the cured gypsum body has a compressive strength of 25 kgf/cm² or more, the cured gypsum body has sufficient compressive strength for practical use in a gypsum board.

For example, when a cured gypsum body in which paper is blended at a proportion of 2.5 mass% relative to the gypsum raw material is used for a gypsum board, the proportion of paper, as organic fiber contained in the gypsum core of the gypsum board, is 2.5 mass%.

### (6) Examination of the Effect of the Specific Surface Area of Recycled Gypsum on the Compressive Strength of a Cured Gypsum Body (Experimental Example 3)

Recycled gypsum can be produced, for example, by crushing gypsum board waste, followed by sieving and calcination. Further, by selecting the degree of crushing and sieving of the gypsum board waste, the degree to which organic fibers are separated from the recycled gypsum can be controlled, and the amount of organic fibers mixed into the recycled gypsum can be adjusted. The crushing and the sieving may be carried out multiple times.

The crushing apparatus used for crushing the gypsum board waste is not particularly limited, and may be selected in accordance with the desired organic fiber content and the corresponding post-crushing particle size. For example, when gypsum board waste is coarsely crushed, a screen crusher or the like may be used as the crushing apparatus. Further, when the gypsum board waste is pulverized into a fine powder in order to reduce the organic fiber content, a roll crusher, hammer mill, or the like may be used as the crushing apparatus. It is to be noted that crushing may also be carried out in multiple stages, and the crushing apparatus may be selected in accordance with the target particle size of the gypsum board waste at each stage.

The sieve opening size and the like used in sieving are not particularly limited, and may be selected according to the degree of separation of organic fibers, the type of organic fibers to be separated, the particle size distribution of the crushed gypsum board waste, and the like. Sieving may also be carried out in multiple stages.

However, depending on the degree of crushing during production of recycled gypsum, the strength of the gypsum board may be affected. Accordingly, the inventors examined the relationship between the specific surface area of recycled gypsum and the compressive strength of a cured gypsum body.

Specifically, in Experimental Examples 3-1 to 3-5, gypsum slurry was prepared using only recycled gypsum as the gypsum raw material. The gypsum slurry was prepared by kneading the gypsum raw material, paper, and water so as to have the blending proportions illustrated in Table 3 below. It is to be noted that the water used for preparing the gypsum slurry was added in an amount such that the cured gypsum body obtained by curing the gypsum slurry had a predetermined specific gravity. A cured gypsum body was then produced under the same conditions as in Experimental Example 2 except that the above gypsum slurry was used, and the compressive strength was evaluated.

The recycled gypsum was prepared by dry crushing gypsum board waste, followed by sieving and calcination, and the paper was completely removed. The recycled gypsum used in Experimental Examples 3-1 to 3-5 was prepared by adjusting the degree of crushing during its production, and the specific surface area of each sample, measured using a Blaine air permeator and particle-size measuring instrument, is represented by the BSA value (hereinafter also referred to as "BSA") illustrated in Table 3.

As the paper, paper recovered during production of the recycled gypsum was used.

**[Table 3]**

| | Raw Materials (Parts by Mass) | | | BSA (cm²/g) | Evaluation Results of Cured Gypsum Body | |
|---|---|---|---|---|---|---|
| | Gypsum Raw Materials | | Paper | | Specific Gravity | Compressive Strength (kgf/cm²) |
| | Virgin Gypsum | Recycled Gypsum | | | | |
| Experimental Example 3-1 | 0 | 100 | 2.5 | 1700 | 0.65 | 41.1 |
| Experimental Example 3-2 | 0 | 100 | 2.5 | 6800 | 0.65 | 41.0 |
| Experimental Example 3-3 | 0 | 100 | 2.5 | 10100 | 0.65 | 41.5 |
| Experimental Example 3-4 | 0 | 100 | 2.5 | 13100 | 0.65 | 44.5 |
| Experimental Example 3-5 | 0 | 100 | 2.5 | 18200 | 0.65 | 41.3 |

According to the results shown in Table 3, regardless of the BSA value of the recycled gypsum, the cured gypsum body exhibited a compressive strength of 25 kgf/cm² or more, confirming that the cured gypsum body has sufficient strength.

According to examination performed by the inventors, in order to produce the recycled gypsum of Experimental Example 3-5 having a BSA of 18,200 cm²/g, multi-stage crushing and sieving are required. Furthermore, when the material is crushed more finely to further increase the BSA, clogging is likely to occur during sieving.

Accordingly, the recycled gypsum of Experimental Examples 3-1 to 3-5 illustrated in Table 3 can be regarded as encompassing the full range of BSA values for recycled gypsum produced by crushing gypsum board waste.

### (7) Examination of the Effect of the Proportion of Recycled Gypsum in the Gypsum Raw Material on the Compressive Strength of a Cured Gypsum Body (Experimental Example 4)

Next, the inventors of the present invention examined the compressive strength of a cured gypsum body when the proportion of recycled gypsum in the gypsum raw material was varied.

The compressive strength of a cured gypsum body obtained by curing a gypsum slurry, which is prepared by varying the mass proportion of recycled gypsum in the gypsum raw material, was evaluated.

Specifically, in Experimental Examples 4-1 to 4-6, a gypsum slurry was prepared by mixing together virgin gypsum, recycled gypsum, and water in accordance with the blending ratios illustrated in Table 4 below. Note that the water used for preparing the gypsum slurry was added in an amount such that the cured gypsum body obtained by curing the gypsum slurry had a predetermined specific gravity. A cured gypsum body was then produced under the same conditions as in Experimental Example 2 except that the above gypsum slurry was used, and the compressive strength was evaluated.

The recycled gypsum was prepared by dry crushing gypsum board waste, followed by sieving and calcination. In the recycled gypsum, paper was first completely removed during the preparation process; however, after calcination, paper as an organic fiber was added so that the proportion thereof was 2.5 parts by mass relative to 100 parts by mass of gypsum. As the paper, paper recovered during production of the recycled gypsum was used.

The recycled gypsum used in Experimental Examples 4-1 to 4-6 had a BSA of 1,700 cm²/g. The BSA illustrated in Table 4 is the BSA of the gypsum raw material total. The virgin gypsum used was a new gypsum raw material that was not a recycled product.

The evaluation results are illustrated in Table 4.

**[Table 4]**

| | Raw Materials (Parts by Mass) | | BSA (cm²/g) | Evaluation Results of Cured Gypsum Body | |
|---|---|---|---|---|---|
| | Gypsum Raw Materials | | | Specific Gravity | Compressive Strength (kgf/cm2) |
| | Virgin Gypsum | Recycled Gypsum | | | |
| Experimental Example 4-1 | 0 | 100 | 1700 | 0.65 | 41.1 |
| Experimental Example 4-2 | 20 | 80 | 3300 | 0.65 | 41.8 |
| Experimental Example 4-3 | 40 | 60 | 4200 | 0.65 | 43.1 |
| Experimental Example 4-4 | 50 | 50 | 5000 | 0.65 | 43.8 |
| Experimental Example 4-5 | 70 | 30 | 6300 | 0.65 | 46.5 |
| Experimental Example 4-6 | 90 | 10 | 7500 | 0.65 | 47.0 |

According to the results shown in Table 4, regardless of the proportion of the recycled gypsum in the gypsum raw material, the cured gypsum body exhibited a compressive strength of 25 kgf/cm² or more, confirming that the cured gypsum body has sufficient strength.

### [Method for Producing Gypsum Board]

The method for producing the gypsum board according to the present embodiment may include a gypsum slurry preparation step, a forming step, and a curing step.

With the method for producing the gypsum board according to the present embodiment, the gypsum board according to one aspect of the present disclosure can be produced. Therefore, descriptions of matters already described with respect to the gypsum board are partially omitted.

### (Gypsum Slurry Preparation Step)

In the gypsum slurry preparation step, a gypsum slurry can be prepared by mixing with water a gypsum raw material containing recycled gypsum recovered from gypsum board waste.

The proportion of recycled gypsum in the gypsum raw material is not particularly limited, but is preferably 30 mass% or more and 100 mass% or less, more preferably more than 60 mass% and 100 mass% or less, and still more preferably 65 mass% or more and 100 mass% or less.

For example, these raw material components can be kneaded using a mixer or the like to prepare the gypsum slurry. Various additives such as a foaming agent may also be added to the gypsum slurry as necessary. Since the raw materials of the gypsum slurry that can be suitably used have already been described, their description is omitted here.

The recycled gypsum used in the gypsum slurry preparation step preferably has a BSA of 1,500 cm²/g or more and 20,000 cm²/g or less.

By setting the BSA of the recycled gypsum to 1,500 cm²/g or more, organic fibers derived from the gypsum board liner of gypsum board waste can be easily removed, and the noncombustible properties of the resulting gypsum board in particular can be improved.

Increasing the BSA of the recycled gypsum facilitates removal of organic fibers and particularly reduces the amount of organic fibers mixed into the recycled gypsum. However, if the BSA is excessively high, clogging may occur during sieving, which may instead make removal of organic fibers difficult. Therefore, the BSA is preferably 20,000 cm²/g or less.

### (Forming Step)

In the forming step, the gypsum slurry prepared in the gypsum slurry preparation step is molded to obtain molded gypsum slurry.

When a plurality of types of gypsum slurries having different foam addition conditions are prepared by adding foam to the slurry in the gypsum slurry preparation step, each gypsum slurry may be supplied in the forming step in a desired stacking order to form a laminate of the gypsum slurries.

Further, for example, when producing a gypsum board as the gypsum board 10, the gypsum slurry may be placed between sheets of the gypsum board liner and passed through a forming machine to produce a gypsum slurry molded body.

In producing a gypsum board as the gypsum board 10, the gypsum board liner is not particularly limited, but preferably has a basis weight of 200 g/m² or less.

This is because setting the basis weight to 200 g/m² or less improves the noncombustible properties of the gypsum board.

### (Curing Step)

In the curing step, the molded gypsum slurry obtained in the forming step can be cured.

The curing step can be carried out by a hydration reaction in which calcined gypsum (hemihydrate gypsum) contained in the gypsum raw material in the gypsum slurry forms acicular crystals of dihydrate gypsum, thereby causing setting and solidification. Accordingly, the curing step can be carried out as the hydration reaction of the calcined gypsum proceeds through a reaction between the calcined gypsum contained in the gypsum raw material added to the gypsum slurry and water within the molded gypsum slurry formed in the forming step.

Specifically, the gypsum core may have a proportion of organic fibers of 3.0 mass% or less.

The method for producing the gypsum board according to the present embodiment may further include optional steps. Specifically, for example, the method may include the following cutting step and drying step.

### (Cutting Step)

In the cutting step, the molded gypsum slurry can be cut using a cutting device.

After the molded gypsum slurry is formed in the forming step, the gypsum slurry gradually cures. Thus, the cutting step may be carried out, for example, during the curing step or after completion of the curing step. However, it is preferable to carry out the cutting step after the curing step has progressed to an extent that allows the molded gypsum slurry to be cut.

The cutting step may be carried out multiple times. Thus, the method for producing the gypsum board according to the present embodiment may include, for example, a first cutting step that may also be referred to as a rough cutting step. A second cutting step may also be included.

In the first cutting step, the molded gypsum slurry can be cut to a desired size according to, for example, the size of a dryer used in the drying step described below.

The second cutting step may be carried out, for example, after the drying step, and the molded gypsum slurry can be cut to obtain a desired product size.

### (Drying Step)

In the drying step, the molded gypsum slurry can be dried. In the drying step, excess water contained in the molded gypsum slurry can be removed by drying. Note that it is preferable to supply the molded gypsum slurry for the drying step after completion of the curing step. The drying step can be carried out by forcibly drying the molded gypsum slurry body using a dryer.

The method for forcibly drying the molded gypsum slurry using a dryer is not particularly limited. For example, a dryer may be provided along a conveyance path of the molded gypsum slurry so that the molded gypsum slurry is continuously dried while passing through the dryer. Alternatively, the molded gypsum slurry may be introduced into the dryer and dried in batches.

### (Recycled Gypsum Production Step)

In the recycled gypsum production step, recycled gypsum can be produced by crushing and calcining gypsum board waste. The produced recycled gypsum can be supplied for the gypsum slurry preparation step.

In the recycled gypsum production step, means for crushing gypsum board waste is not particularly limited. For example, dry crushing may be used. The dry-crushed product of gypsum board waste can suppress adhesion or inclusion of moisture with or in the crushed material during crushing as compared with a wet-crushed product or the like. Therefore, by dry crushing the gypsum board waste, energy required during calcination can be reduced and inclusion of dihydrate gypsum can be suppressed.

Therefore, the recycled gypsum supplied to the gypsum slurry preparation step may include a dry-crushed product of gypsum board waste, and the recycled gypsum may be composed of the dry-crushed product of gypsum board waste.

In the recycled gypsum production step, components other than gypsum, such as metal or paper fragments, may be removed as necessary by sieving, magnetic separation, or the like.

According to the method for producing the gypsum board of the present embodiment, a gypsum board having noncombustible properties can be obtained even when recycled gypsum recovered from gypsum board waste is used as the gypsum raw material.

### [Remarks]

(1) According to one aspect of the present disclosure, includes:
   a gypsum core,
   wherein the gypsum core is a cured body of a gypsum slurry including water and a gypsum raw material containing recycled gypsum recovered from gypsum board waste, and
   wherein the gypsum core contains organic fibers in a proportion of 3.0 mass% or less.
(2) In (1), a proportion of the recycled gypsum in the gypsum raw material may be 30 mass% or more and 100 mass% or less.
(3) In (1) or (2), the recycled gypsum main may contain dry-crushed product of the gypsum board waste
(4) In any one of (1) to (3), the gypsum board may have a specific gravity of 0.65 or more.
(5) In any one of (1) to (4), a total heat release of the gypsum board over a period of 20 minutes may be 8 MJ/m².
(6) In any one of (1) to (5), the gypsum board may have a gypsum board liner on each of an upper surface and a lower surface of the gypsum core, and each gypsum board liner may have a basis weight of 200 g/m² or less.
(7) In any one of (1) to (6), the gypsum board may have a gypsum board liner on each of an upper surface and a lower surface of the gypsum core, and a total heat release of the gypsum board over a period of 20 minutes may be 8 MJ/m² or less.
(8) A method for producing a gypsum board according to an aspect of the present disclosure includes a gypsum slurry preparation step of preparing a gypsum slurry by mixing with water a gypsum raw material including recycled gypsum recovered from gypsum board waste;
   a forming step of forming molded gypsum slurry by molding the gypsum slurry; and
   a curing step of curing the molded gypsum slurry,
   wherein the gypsum core included in the gypsum board obtained upon completion of the curing step contains organic fibers in a proportion of 3.0 mass% or less.
(9) In (8), in the forming step, the gypsum slurry may be disposed and formed between gypsum board liners, and gypsum board liner may have a basis weight of 200 g/m² or less.
(10) In (8) or (9), the recycled gypsum may contain dry-crushed product of the gypsum board waste.

Although the gypsum board and the method for producing the gypsum board have been described above with reference to embodiments and the like, the present invention is not limited to the above embodiments. Various modifications and changes can be made within the scope of the gist of the present invention described in the claims.

This application claims priority based on Japanese Patent Application No. 2024-012315 filed with the Japan Patent Office on January 30, 2024, and the entire contents of Japanese Patent Application No. 2024-012315 are incorporated herein by reference in this international application.

### Reference Signs List

10 Gypsum board
11 Gypsum core
11A Upper surface
11B Lower surface
11C Side surface

## Claims

1. A gypsum board comprising:
a gypsum core,
wherein the gypsum core is a cured body of a gypsum slurry including water and a gypsum raw material containing recycled gypsum recovered from gypsum board waste, and
wherein the gypsum core contains organic fibers in a proportion of 3.0 mass% or less.

2. The gypsum board according to claim 1, wherein a proportion of the recycled gypsum in the gypsum raw material is 30 mass% or more and 100 mass% or less.

3. The gypsum board according to claim 1 or 2, wherein the recycled gypsum contains dry-crushed product of the gypsum board waste.

4. The gypsum board according to claim 1 or 2, wherein the gypsum board has a specific gravity of 0.65 or more.

5. The gypsum board according to claim 1 or 2, wherein a total heat release of the gypsum board over a period of 20 minutes is 8 MJ/m².

6. The gypsum board according to claim 1 or 2, wherein the gypsum board has a gypsum board liner on each of an upper surface and a lower surface of the gypsum core, and wherein each gypsum board liner has a basis weight of 200 g/m² or less.

7. The gypsum board according to claim 1 or 2, wherein the gypsum board has a gypsum board liner on each of an upper surface and a lower surface of the gypsum core, and wherein a total heat release of the gypsum board over a period of 20 minutes is 8 MJ/m² or less.

8. A method for producing a gypsum board, the method comprising:
a gypsum slurry preparation step of preparing a gypsum slurry by mixing with water a gypsum raw material including recycled gypsum recovered from gypsum board waste;
a forming step of forming molded gypsum slurry by molding the gypsum slurry; and
a curing step of curing the molded gypsum slurry,
wherein the gypsum core included in the gypsum board obtained upon completion of the curing step contains organic fibers in a proportion of 3.0 mass% or less.

9. The method for producing the gypsum board according to claim 8, wherein in the forming step, the gypsum slurry is disposed and formed between gypsum board liners, and wherein each gypsum board liner has a basis weight of 200 g/m² or less.

10. The method for producing the gypsum board according to claim 8 or 9, wherein the recycled gypsum contains dry-crushed product of the gypsum board waste.
